# EUROPEAN PATENT SPECIFICATION

(11) **EP 4 549 725 B1**
(45) Date of publication and mention of the grant of the patent: **24.06.2026**
(21) Application number: 24208777.3
(22) Date of filing: 24.10.2024
(51) Int. Cl.: F03B 17/06, H02K 7/18, F16L 15/00, F16L 29/02, F16L 5/00, F16L 29/00

(54) **FITTING**
BESCHLAG
RACCORD

(30) Priority: 31.10.2023 IT 202300022836; 17.10.2024 IT 202400023115
(43) Date of publication of application: 07.05.2025
(73) Proprietor: Camozzi Automation S.p.A., 20134 Milano (IT)
(72) Inventor: BELLINI, Peter, I-20134 MILANO (IT); BIGNOTTI, Mauro, I-20134 MILANO (IT); CAMISANI, Andrea, I-20134 MILANO (IT); CORTESI, Paolo, I-20134 MILANO (IT); FINULLI, Claudio, I-20134 MILANO (IT); GHIROLDI, Gian Pietro, I-20134 MILANO (IT); MINGOTTI, Alberto, I-20134 MILANO (IT); ROSSI, Marco, I-20134 MILANO (IT); TEDESCHI, Francesca, I-20134 MILANO (IT); VITALI, Fabio, I-20134 MILANO (IT); ZANACCHI, Alessandro, I-20134 MILANO (IT); BIANCO, Gloria, I-20134 MILANO (IT); INGLESE, Francesco, I-20134 MILANO (IT); JANSEN VAN VUUREN, Godfried, I-20134 MILANO (IT); PATERLINI, Antonio, I-20134 MILANO (IT); ROMANO, Donato, I-20134 MILANO (IT); SANTAERA, Gaspare, I-20134 MILANO (IT); STEFANINI, Cesare, I-20134 MILANO (IT)
(74) Representative: Chimini, Francesco

(56) References cited:
- DE-A1- 102010 009 215
- DE-U1- 9 290 093
- US-A1- 2004 195 840
- US-A1- 2011 232 785

## Description

The present invention relates to a fitting for fluids, for example compressed air, comprising impeller means drivable by the pressurized fluid crossing the fitting to generate electrical energy.

Pneumatic or hydraulic devices, in particular valves for regulating the flow of a fluid, are known to be provided with means for recovering kinetic and/or potential energy that would otherwise be wasted. These energy recovery means generally comprise a rotating element and diffusing means adapted to direct the fluid towards the recovery means.

A valve of this type is for example described in DE102010009215A1 or in WO2014132187A2.

However, apart from the recovery of energy that would otherwise be lost, there is also an increasing need to utilize part of the kinetic and/or potential energy of a fluid flowing in a pneumatic and hydraulic component in order to produce electrical energy.

Hydraulic devices have already been proposed, for example in domestic thermal and sanitary installations, wherein the water circulating within a component of the system, such as a pipe, a tap, a shower head, or the like, actuates a turbine that powers an electronic device in order to produce a light and/or sound effect for example.

There are industrial applications where it is necessary to detect or monitor by means of sensors certain quantities associated with the passage of a fluid, from the simple detection of the presence or absence of a fluid flow in a part of a circuit, to the detection of certain features of the fluid flow, for example the flow rate, pressure, temperature, humidity, etc., but where the electrical wiring of the sensors arranged in the part of the circuit of interest is very inconvenient or expensive, if not impossible.

In addition, also due to the environment wherein a component or part of a pressurized fluid circuit is installed, there may be very rigid constraints in terms of space and/or insulation (from water, humidity, external agents, heat, etc.) that the electrical energy generation means must meet.

The object of the present invention is to propose a fitting for a pressurized fluid circuit capable of generating electrical energy, for example for powering sensors, whilst satisfying the aforementioned requirements for compactness, robustness, design simplicity, and insulation.

Said object is achieved with a fitting according to claim 1. The dependent claims describe preferred or advantageous embodiments of the fitting.

The features and advantages of the fitting according to the invention shall be made apparent from the following description of preferred embodiments thereof, provided purely by way of non-limiting example, with reference to the accompanying figures, wherein:

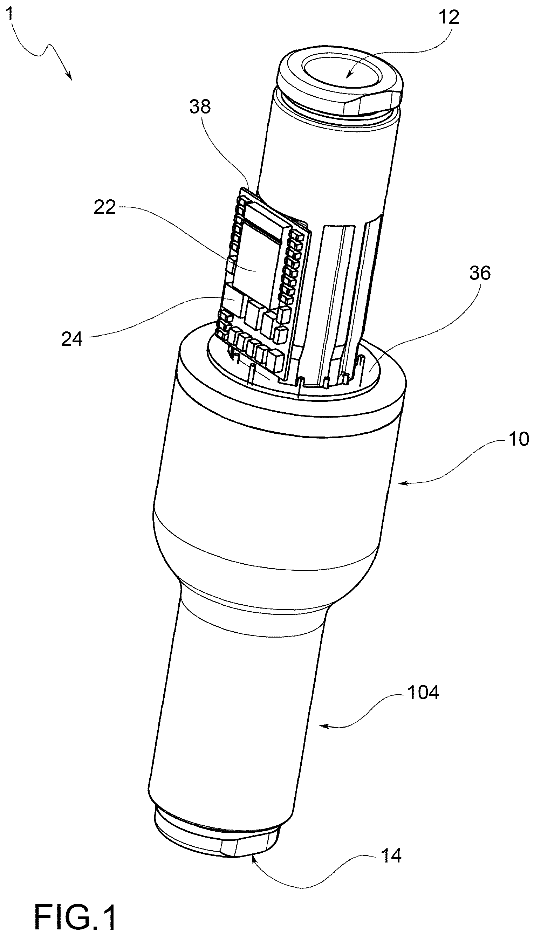

- Figure 1 is a perspective view of the fitting according to the invention;

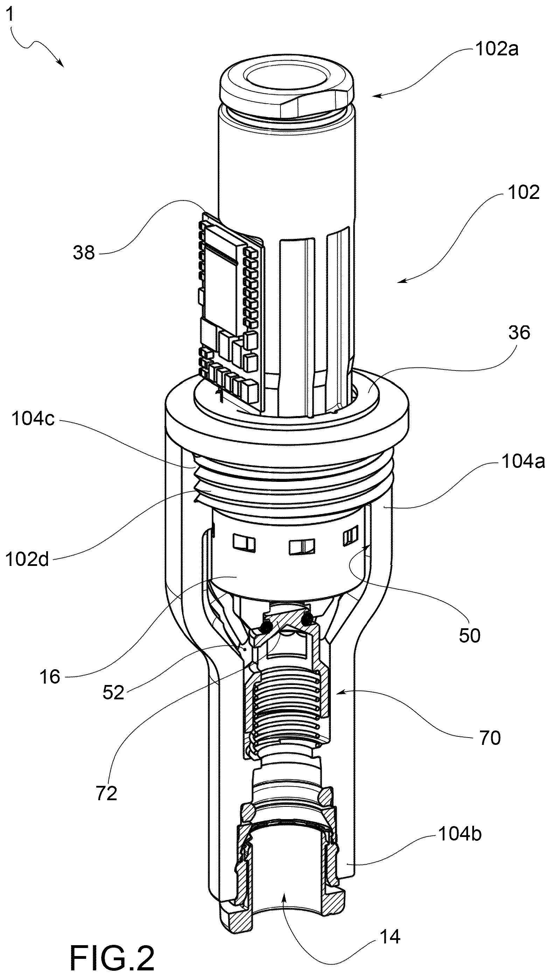

- Figure 2 is a perspective view of the fitting in partial axial cross-section;
- Figure 3 is an axial cross-section of the fitting;

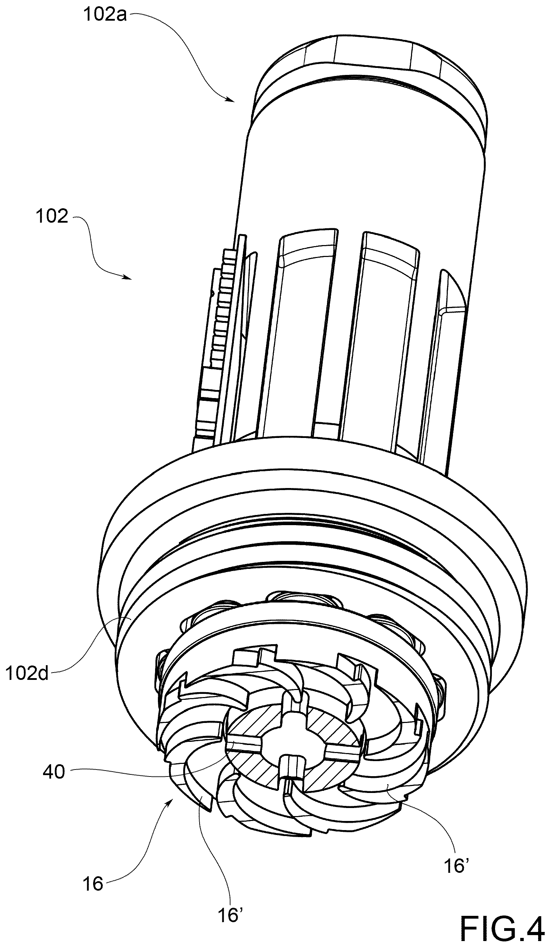

- Figure 4 is a cross-section of the fitting, at the impeller;

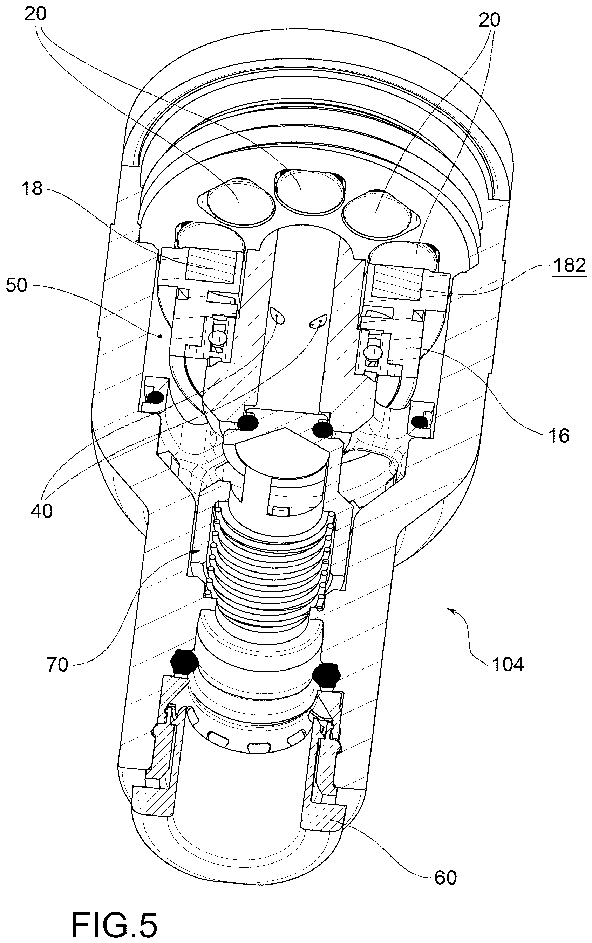

- Figure 5 is a perspective view, in partial axial cross-section, of a portion of the fitting;
- Figure 6 is an axial cross-section of a first element which forms the body of the fitting, in one embodiment;

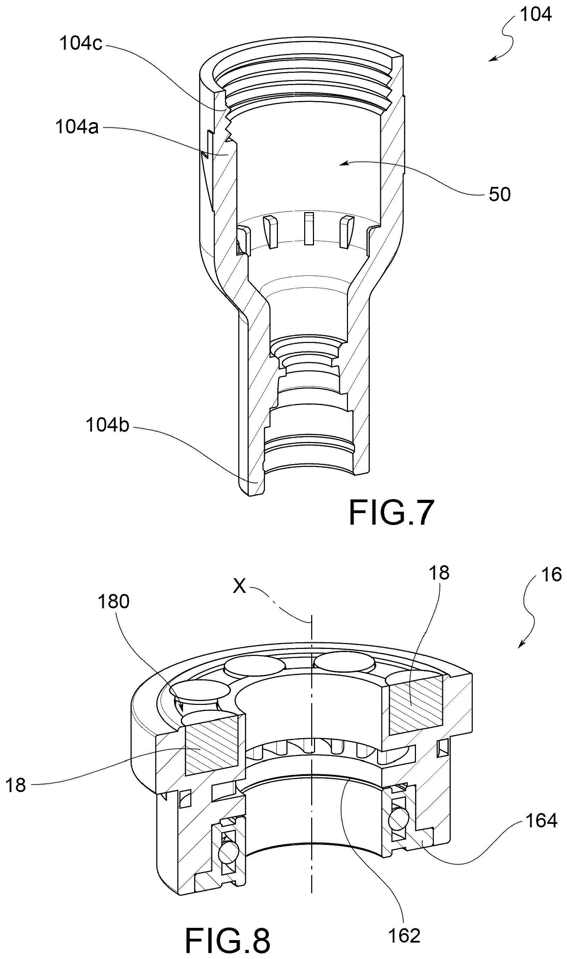

- Figure 7 is an axial cross-section of a second element which forms the body of the fitting, in one embodiment;
- Figure 8 is a cross-section of the impeller according to the invention;
- Figure 9 is a perspective view of the ring of coils of the fitting according to the invention;
- Figure 10 is a perspective view of the electronic boards of the fitting according to the invention;
- Figure 11 is an axial cross-section of a third element which forms the body of the fitting;
- Figure 12 is a perspective view of an example of a one-way valve used in the fitting according to the invention; and
- Figure 13 shows some electrical circuits of the main electronic board of the fitting according to the invention.

In said drawings, reference numeral 1 indicates a fitting for a pressurized fluid circuit, for example a pneumatic circuit.

In the context of the present invention, the term "fitting" does not necessarily have to be understood in a strict sense to be a component which has the sole function of sealingly connecting two tubes or ducts of a pressurized fluid circuit (although the present invention, due to the features of compactness and robustness thereof, lends itself particularly to being applied to such a component), but may also comprise other components or parts of components wherein a pressurized fluid flows from a first passage (which may be defined as an inlet passage) to at least one second passage (which may be defined as an outlet passage), amongst which other functional elements may also be present, for example a shutter.

Furthermore, all directional references (e.g., upper, lower, upward, downward, left, right, towards the left, towards the right, at the top, at the bottom, above, below, vertical, horizontal, clockwise and counterclockwise) are used only for identification purposes in order to help the reader understand the described embodiments and do not create limitations, in particular with regard to the position, orientation or use of the described embodiments.

The conjunction references (e.g. fixed, coupled, connected, and the like) must be interpreted broadly and may include intermediate elements between a connection of elements and a relative movement between elements. The conjunction references do not therefore necessarily imply that two elements are directly connected in a fixed relationship with one another.

In a general embodiment, fitting 1 comprises a fitting body 10 crossed by a main passage 11 for a pressurized fluid, such as compressed air.

The main passage 11 extends between a fluid inlet opening 12 and a fluid outlet opening 14.

In an embodiment illustrated in the drawings, the fitting body 10 extends mainly along a fitting axis Y, the inlet opening 12, and the outlet opening 14 being aligned with one another along said fitting axis Y. In other words, fitting 1 is an inline fitting that extends in the same direction as the axis of an incoming tube and consequently also the axis of an outlet tube (not shown).

The invention may however be implemented in other fitting layouts, such as "L" or "T" fittings.

In an embodiment shown in the drawings, the inlet 12 and outlet 14 openings accommodate connection cartridges 60, for example of the super-fast type, for connecting to the respective tubes thereof.

An impeller 16 is housed in the fitting body 10, which impeller is rotatably drivable by the pressurized fluid crossing the fitting body 10.

In one embodiment, the impeller 16 is of the radial type, i.e., it is provided with a plurality of blades 16', preferably curved blades, extending mainly in a radial direction from the center of the impeller, which coincides with the rotation axis X thereof, towards the outside.

In one embodiment, the impeller 16 has the rotation axis X coaxial to at least one portion of the main passage 11.

In other embodiments, the impeller 16 may have the rotation axis X orthogonal to the main passage 11.

The impeller 16 further supports a plurality of magnets 18, for example arranged within respective magnet seats 182 obtained within the body of the impeller 16 itself.

The magnets 18 are distributed circumferentially so as to form a magnet ring 180. For example, the magnet seats 182 are obtained coaxially to the rotation axis X of the impeller 16, and preferably are axially superimposed on the blades 16' of the impeller 16, in such a way as to encompass the radial dimensions of the fitting.

A plurality of coils 20 is also housed within the fitting body 10. The coils 20 are distributed circumferentially so as to form a coil ring 200 magnetically coupled to the magnet ring 180. In the presence of a variable magnetic field, generated by the rotation of the magnet ring 180, an electric current is generated in the electrical windings of the coils 20 which has an intensity sufficient to be used to power electronic devices, as will be described below.

For example, coil ring 200 is coaxial to the rotation axis X of the impeller. Preferably, coil ring 200 is axially superimposed on the magnet ring 180, so as to maximize the electric current generated by the variable magnetic field whilst at the same time encompassing the radial dimensions of the fitting.

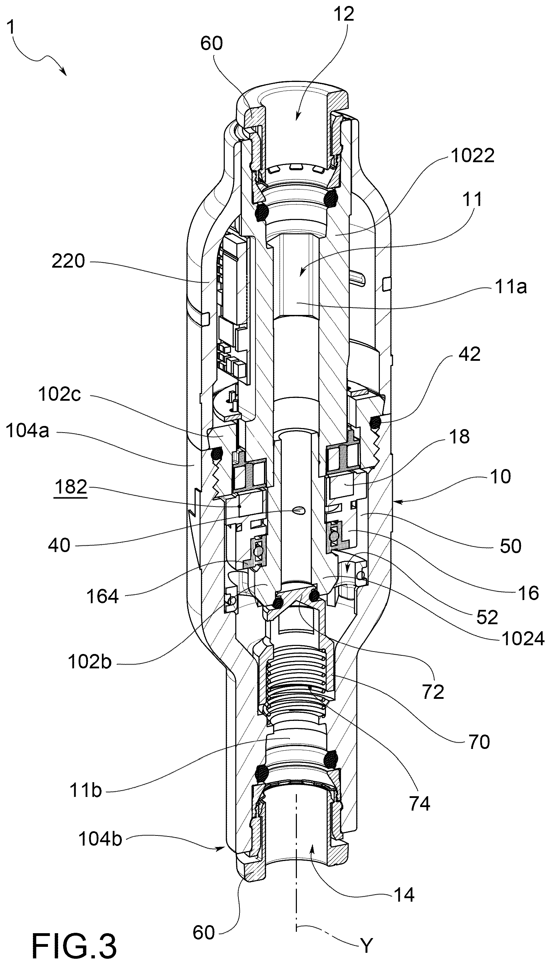

In a preferred embodiment, the electric current generated by the coils 20 powers at least one sensor 22 integrated into the fitting body 10, or otherwise encapsulated in a protective casing 220 fastened to the fitting body 10 (Figure 3). For example, sensor 22 is suitable for detecting one or more of temperature, humidity, fluid pressure, flow rate.

In one embodiment, the electric current generated by the coils 20 also powers an electronic data transmission unit 24, such as a microprocessor unit.

In one embodiment, the electric current generated by the coils 20 also powers at least one LED, for example to indicate when the impeller produces energy.

The electronic data transmission unit 24 is operatively connected to the at least one sensor 22 and is configured to wirelessly transmit data received from the at least one sensor 22.

In one embodiment, the data transmission unit 24 is configured to transmit, for example by means of a radio transmitter, a wireless presence signal when it receives voltage, i.e., it is powered by the current generated by the coils 20. For example, the presence signal is transmitted to a network or to a receiving device according to a predetermined communication protocol.

Also in the absence of sensors, the electronic data transmission unit 24 is thus configured to communicate at least the passage of fluid in the fitting, without further processing. This signal is sufficient to indicate that the impeller is rotating.

In one embodiment, the presence signal, for example sent to a network, includes a data packet containing a unique code for the fitting. This allows one or more devices receiving the presence signal, so as the other components of the network, to recognize the presence of said fitting.

The fitting may therefore be inserted into a network composed of several similar "smart" fittings 1.

For example, if, in a network that includes a plurality of fittings 1, wherein each fitting 1 sends, for example periodically, a flow present signal, the network detects that one of the fittings has stopped sending the signal, the network may automatically identify the anomalous fitting and assume that there is a problem (for example a detached tube or damaged gasket).

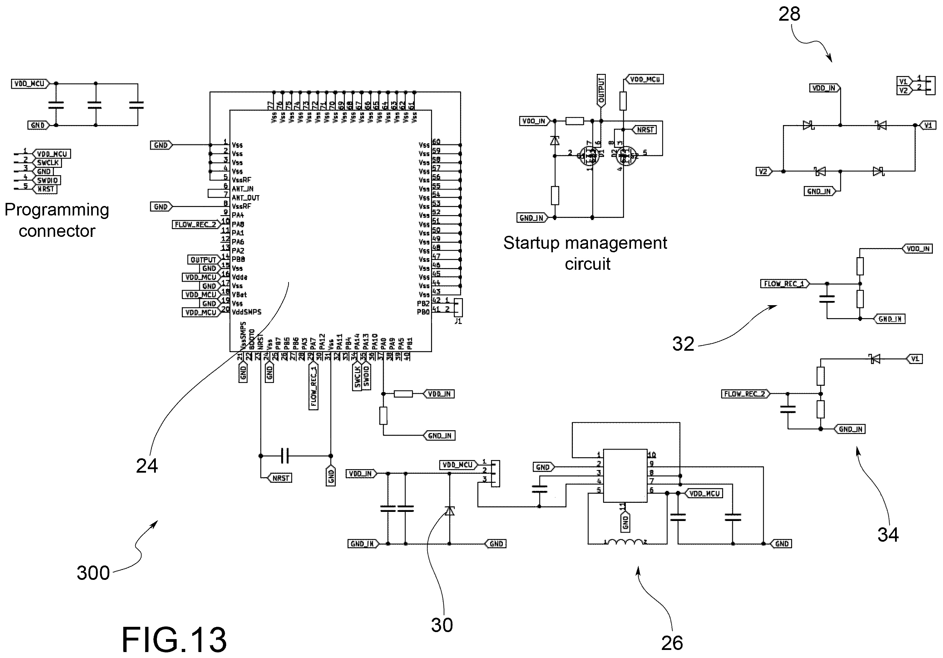

An example of an electronic circuit 300 adapted to manage the energy generated by the impeller 16 will now be described in more detail, with reference to Figure 13. The electronic circuit 300 comprises, in addition to a micro-controller 24 that also implements the function of a radio transmitter, a power supply 26 that powers the components of the electronic circuit.

When the fluid flow is sufficient to allow the impeller 16 to produce electrical energy, the periodic wave thus generated is rectified by means of a rectifier bridge 28.

The rectified wave, suitably filtered and limited in amplitude, supplies a part of the circuit configured to generate the voltage necessary for the correct operation of the micro-controller 24.

In one embodiment, since in the presence of a flow with a high flow rates the sinusoidal current wave generated by the coils 20 may reach peak-to-peak voltage levels that are harmful to the power supply, the power supply circuit 26 comprises a Zener diode 30 for protection.

Although this solution means that part of the energy produced by the impeller that is above the activation threshold of the Zener diode 30 is not used, a Zener diode is nevertheless chosen in such a way that the available energy is always sufficient to ensure the correct functioning of the components of the electronic circuit.

In one embodiment, the electronic circuit 300 is suitable for detecting fluid flow characteristics. For this purpose, the electronic circuit 300 comprises a rectified voltage reading circuit 32 and a half-wave voltage reading circuit 34 which, by means of a voltage splitter, allow the microprocessor 24 to read the rectified and half-wave voltages.

By means of the rectified and the half-wave voltage it is possible to calculate the available instantaneous energy. With this information, it is possible to implement strategies for managing the low-power modes allowed for by the microprocessor, for example enabling or disabling the sensors 22.

By virtue of reading the half-wave voltage it is possible, for example, to estimate, by means of appropriate algorithms, the pressure and flow rate values.

In addition to one or more sensors 22 that may be connected to the electronic circuit 300, it is possible to connect actuators for manipulating the flow or for indicating the state of the device and the physical quantities monitored thereby.

All of the information collected by the sensors, calculated data and control signals for the actuators are transmitted via wireless technology (for example Bluetooth Low Energy), integrated into the microprocessor 24. This technology allows for communication with an external device and therefore one or more users to monitor, configure and control the connection.

Turning now to the construction features of the fitting, in one embodiment, the coils 20 are arranged in such a way as to have their respective axes parallel to the rotation axis X of the impeller.

Furthermore, the electrical terminals 202 of the coils 20 may also be oriented parallel to the rotation axis X of the impeller. This also allows the coils 20 to be connected in series with one another by means of an electronic coil connection board 36 with an annular shape, supported by the fitting body 10 coaxially to the rotation axis X of the impeller.

In other embodiments, for example wherein the magnets 18 are arranged on the outer circumference of the impeller 16, the coils 20 could also be arranged in this way, i.e., with the relative axes orthogonal to the rotation axis of the impeller.

This electronic coil connection board 36 is in turn connected to a main electronic board 38, whereupon the electronic circuit 300 described above is obtained and whereupon at least one sensor 22 may be mounted.

This main electronic board 38 may be arranged perpendicularly with respect to the electronic coil connection board 36, **i.e.,** lying in a plane parallel to the rotation axis X of the impeller 16.

A plurality of nozzles 40 for supplying the impeller 16 is obtained in the fitting body 10. According to the present invention, said nozzles 40 extend radially from the main passage 11. For example, four nozzles 40 are obtained in the fitting body 10, spaced apart by an angle of 90° and perpendicular to the rotation axis X of the impeller 16.

The nozzles 40 emerge between the curved radial blades 16' of the impeller 16.

In one embodiment, the impeller body 16 integrates a ferromagnetic ring 162, i.e., a steel plate, suitable for amplifying the magnetic field.

In one embodiment, the impeller 16 is mounted, for the rotation and guidance thereof, upon at least one impeller support 164 coupled to the fitting body 10. For example, the impeller support 164 consists of a ball bearing or a sliding bush.

In a variant embodiment, the impeller 16 is mounted with clearance on the fitting body 10 so that, when driven in rotation, an annular air cushion is formed between the impeller 16 and the fitting body 10. The air cushion allows the impeller to rotate suspended in the fitting body, without contact with the body and therefore without friction.

According to one aspect of the invention, the impeller 16 is in fluid communication with the outlet opening 14 of the fluid, in such a way that the portion of fluid flow that enters the supply nozzles 40 and supplies the impeller 16 is reconveyed towards the outlet opening 14.

For example, the impeller 16 is in fluid communication with a distal segment of the main passage 11, which ends with the outlet opening 14.

All of the pressurized fluid flow therefore crosses the fitting and exits from the outlet opening 14, including the flow portion that feeds the impeller 16.

On the other hand, not all of the fluid entering the fitting passes through the impeller 16, i.e. not all of it is used to feed the impeller, only part of the flow.

The partialization of the flow entering the fitting for supplying the impeller has several advantages.

The energy taken from the fluid flow entering the fitting for feeding the impeller is a fraction of the total energy, so that most of the flow remains available for the final application (e.g., the actuation of a pneumatic cylinder).

In the event of breakage of the impeller or some of components thereof, the risk of fragments being transported into the circuit downstream of the fitting is limited.

Given the small area of the impeller blades, the fact of discharging a force onto the impeller generated by a fraction of the flow entering the fitting, and therefore a reduced force compared to that generated by the total flow, helps to increase the reliability of the fitting.

It should be noted that the ratio between the flow circulating in the impeller and the flow flowing in the main passage 11 depends upon the fact that the path of the impeller supply fluid has numerous pressure drops, in particular caused by the radial nozzles, which have a very small diameter and force the main flow to deviate abruptly, and by the impeller itself, which channels the flow by extracting mechanical work.

In one embodiment, the impeller 16 is housed within an impeller chamber 50 fluidly connected to the main passage 11 through a return passage 52.

The supply nozzles 40, the impeller chamber 50, and the return passage 52 in practice form a secondary, or bypass, passage connected in parallel to the main passage 11.

In one embodiment, the return passage 52 flows into the main passage 11 in proximity to the outlet opening 14, or in any case into a distal portion of the main passage 11 between the supply nozzles 40 and the outlet opening 14. In an embodiment shown in the drawings, the fitting body 10 comprises a first body section 102 and a second body section 104, arranged in succession along the direction of flow of the fluid crossing the fitting.

More specifically, a first section 11a of the main passage 11 is formed in the first body section 102. The first body section 102 extends between a first proximal portion 102a, which forms the inlet opening 12, and a first distal portion 102b.

In one embodiment, the coil ring 200 is supported by this first body section 102.

In the second body section 104, a second portion 11b of the main passage 11 is obtained. The second body section 104 extends between a second proximal portion 104a and a second distal portion 104b, which forms the outlet opening 14.

As may be seen in particular in Figure 3, the first section 102 of the fitting body 10 is partially and axially inserted into the second section 104 of the fitting body 10. In particular, the second proximal portion 104a coaxially surrounds the first distal portion 102b so as to form, with the first distal portion 102b, the impeller chamber 50 wherein the impeller 16 is housed.

The impeller chamber 50 is in fluid communication with the second section 11b of the main passage 11. For example, the impeller chamber 50 is in the form of a cup, with a larger part accommodating the impeller and a part that progressively narrows and flows into the second portion 11b of the main passage 11.

Therefore, the portion of the fluid flow entering the nozzles 40 and supplying the impeller 16 is redirected towards the outlet opening 14 of the fitting.

In one embodiment, the first distal portion 102b of the first section 102 of the fitting body 10 forms a peripheral flange 102c having a threaded outer surface 102d. The second proximal portion 104a of the second section 104 of the fitting body forms an internally threaded collar 104c suitable for screwing onto the peripheral flange 102c. A sealing ring 42 may be interposed between the two connecting elements.

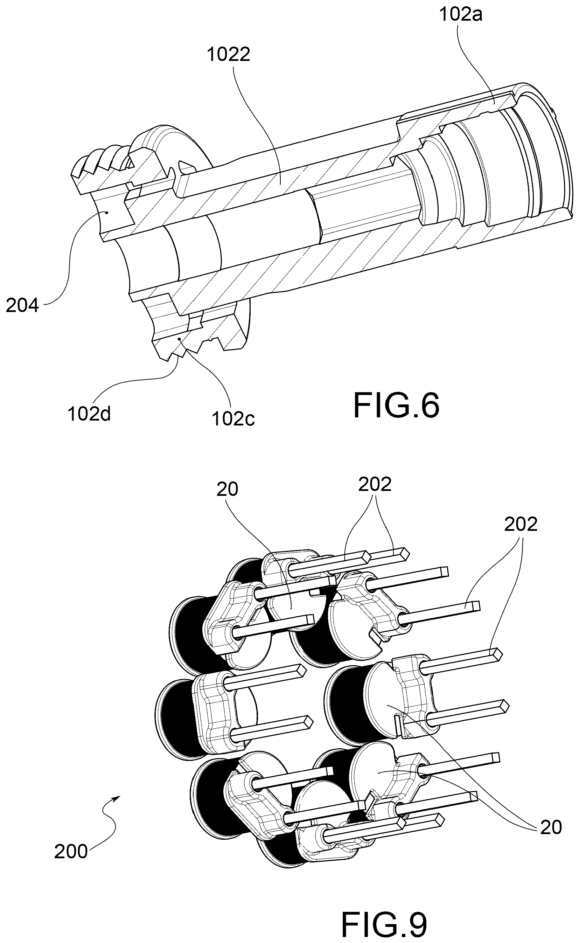

For example, the inner wall of the peripheral flange 102c radially delimits an annular coil seat 204 wherein the coil ring 200 is housed (Figure 6).

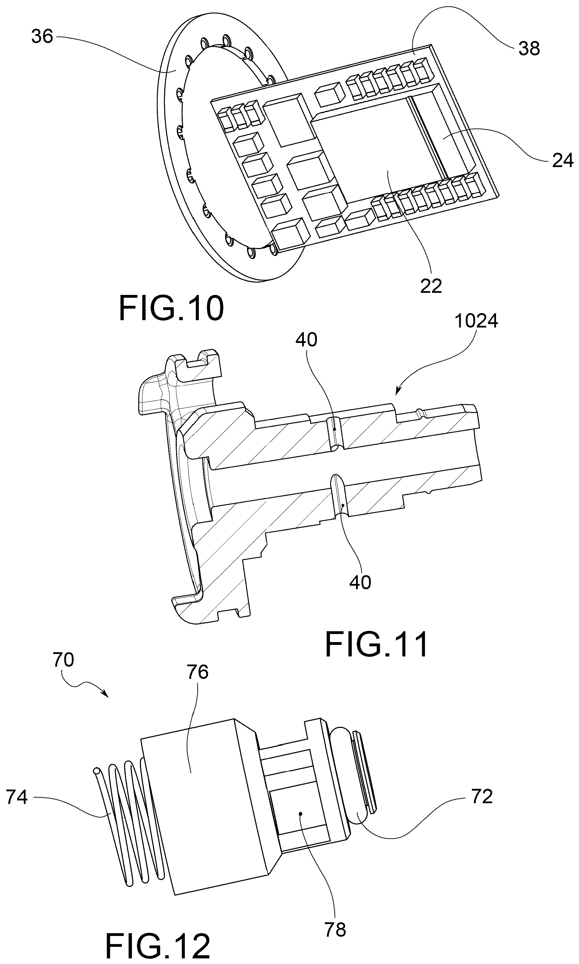

In an embodiment shown in the drawings (Figure 3, 6 and 11), the first section 102 of the fitting body 10 is in turn formed by the axial coupling between a first section first element 1022 (proximal to the direction of fluid flow within the fitting), and a first section second element 1024 (distal element).

In this first section second element 1024, the nozzles 40 for supplying the impeller 26 may be obtained.

In one embodiment, in the main passage 11, downstream of the impeller 16 with respect to the direction of the pressurized fluid, a one-way device 70 is housed that is configured to allow the passage of the fluid in the main passage 11 when the fluid acting on the one-way device 70 has reached a pressure that is sufficient to cause the generation of a predetermined amount of electrical energy.

The energy required to start the impeller from standstill is in fact greater than that necessary to keep it in rotation, once started.

In one embodiment, the one-way device 70 is calibrated so as to open when a minimum pressure difference threshold (ΔP) is reached between the inlet opening and the outlet opening of the fitting. Until such threshold is reached, all of the fluid entering the inlet opening 12 impinges upon the impeller 26, thus facilitating the start-up thereof.

In one embodiment, the one-way device 70 consists of a one-way valve.

More specifically, in one embodiment the one-way valve 70 is housed in the second body section 104 and has an elastically pushed shutter element 72, for example by a helical spring 74, in a closed position of the distal end of the first section 11a of the main passage 11.

For example, the shutter element 72 is supported by a hollow valve body 76, provided with side openings 78, so as to allow the portion of the fluid flow that feeds the impeller 16 to flow towards the outlet opening 14 even when the one-way valve 70 is in the closed position of the main passage 11.

In one possible variant embodiment, the one-way device 70 comprises a duckbill valve, which is a rubber element that only allows the passage of air, in one direction, when a certain pressure differential between the inlet and outlet is exceeded.

The one-way device 70 also makes it possible to limit the drop in pressure and to ensure an adequate flow rate at the outlet of the fitting.

A person skilled in the art may make several changes, adjustments, adaptations and replacements of elements with other functionally equivalent ones to the embodiments of the fitting according to the invention in order to meet incidental needs, without departing from the scope of the following claims. Each of the features described as belonging to a possible embodiment may be obtained independently of the other described embodiments.

## Claims

1. A fitting (1) for a pressurized fluid circuit, comprising:
- a fitting body (10) crossed by a main passage (11) for a pressurized fluid, said main passage (11) extending between a fluid inlet opening (12) and a fluid outlet opening (14);
- an impeller (16) accommodated in the fitting body (10) and drivable in rotation by the pressurized fluid crossing the fitting body (10);
- a plurality of magnets (18) supported by the impeller (16) and distributed circumferentially so as to form a magnet ring (180);
- a plurality of coils (20) housed in the fitting body (10) and distributed circumferentially so as to form a coil ring (200) magnetically coupled to the magnet ring (180) to generate an electric current in the presence of a variable magnetic field generated by the rotation of the magnet ring (180),
wherein a plurality of nozzles (40) for supplying the impeller (16) is obtained in the fitting body (10), which extend radially from the main passage (11),
and wherein the impeller (16) is in fluidic communication with the fluid outlet opening (14) in such a way that the portion of fluid flow that enters the supply nozzles (40) and supplies the impeller (16) is reconveyed towards the outlet opening (14).

2. A fitting according to claim 1, wherein the impeller (16) is housed in an impeller chamber (50) that is fluidically connected to the main passage (11) through a return passage (52), the supply nozzles (40), the impeller chamber (50) and the return passage (52) forming a secondary passage that is connected in parallel to the main passage (11).

3. A fitting according to claim 2, wherein the return passage (52) flows into the main passage (11) in proximity to the outlet opening (14).

4. A fitting according to any one of the preceding claims, comprising an electronic data transmission unit (24) powered by the electric current generated by the coils (20).

5. A fitting according to any one of the preceding claims, comprising at least one sensor (22) powered by the electric current generated by the coil ring (20).

6. A fitting according to claim 4, wherein the electronic data transmission unit (24) is configured to wirelessly transmit a presence signal when powered by the electric current generated by the coil ring (20).

7. A fitting according to claim 6, wherein said presence signal includes a data packet containing a fitting unique code.

8. A fitting according to any one of the claims 6 or 7 in combination with claim 5, wherein the electronic data transmission unit (24) is operatively connected to the at least one sensor (22) and is configured to wirelessly transmit data received from the at least one sensor (22).

9. A fitting according to any one of the preceding claims, wherein the coils (20) are arranged so as to have the respective axes parallel to the rotation axis (X) of the impeller.

10. A fitting according to any one of the preceding claims, wherein the impeller (16) has a rotation axis (X) coaxial to at least one portion of the main passage (11).

11. A fitting according to any one of the preceding claims, wherein the electrical terminals (202) of the coils (20) are oriented parallel to the rotation axis (X) of the impeller.

12. A fitting according to any one of the preceding claims, wherein the fitting body (10) comprises:
- a first body section (102) wherein a first segment (11a) of the main passage (11) is obtained, which extends between a first proximal portion (102a) forming the inlet opening (12) and a first distal portion (102b), the coil ring (200) being supported by said first body section (102);
- a second body section (104) wherein a second segment (11b) of the main passage (11) is obtained, which extends between a second proximal portion (104a) and a second distal portion (104b) which forms the outlet opening (14),
wherein said second proximal portion (104a) coaxially surrounds the first distal portion (102b) so as to form, with the first distal portion (102b), an impeller chamber (50) wherein the impeller (16) is housed,
and wherein the impeller chamber (50) is in fluid communication with the second segment (11b) of the main passage (11).

13. A fitting according to any one of the preceding claims, wherein a one-way device (70) is housed in the main passage (11), downstream of the impeller (16) with respect to the direction of the pressurized fluid, configured so as to open the main passage when the fluid has reached a pressure sufficient to generate a preestablished amount of electricity.

14. A fitting according to claims 12 and 13, wherein the one-way device (70) is housed in the second body portion (104) and has a shutter element (72) adapted to cooperate with the distal end of the first segment (11a) of the main passage (11).

15. A fitting according to any one of the preceding claims, wherein the coils (20) are electrically connected in series with one another.

16. A fitting according to any one of the preceding claims, comprising a main electronic board (38), on which at least one sensor, a data transmission unit, and an electronic control unit are mounted, and an annular coil board (36) to which the electrical terminals of the coils (20) are connected and which is connected to the main electronic board.

## Patentansprüche

1. Ein Beschlag (1) für einen unter Druck stehenden Fluidkreislauf,
umfassend:
einen Beschlagkörper (10), der von einem Hauptdurchgang (11) für ein unter Druck stehendes Fluid durchquert ist, wobei sich der genannte Hauptdurchgang (11) zwischen einer Fluideinlassöffnung (12) und einer Fluidauslassöffnung (14) erstreckt;
ein Laufrad (16), das im Beschlagkörper (10) untergebracht ist und durch das den Beschlagkörper (10) durchquerende unter Druck stehende Fluid in Rotation antreibbar ist;
eine Mehrzahl von Magneten (18), die von dem Laufrad (16) getragen sind und umfangsseitig verteilt sind, so dass ein Magnetring (180) gebildet wird;
eine Mehrzahl von Spulen (20), die im Beschlagkörper (10) untergebracht sind und umfangsseitig verteilt sind, so dass ein Spulenring (200) gebildet wird, der magnetisch mit dem Magnetring (180) gekoppelt ist, um einen elektrischen Strom in Gegenwart eines veränderlichen Magnetfeldes zu erzeugen, das durch die Rotation des Magnetrings (180) erzeugt wird,
wobei eine Mehrzahl von Düsen (40) zur Versorgung des Laufrads (16) im Beschlagkörper (10) vorgesehen ist, die sich radial vom Hauptdurchgang (11) erstrecken,
und wobei das Laufrad (16) in fluidischer Verbindung mit der Fluidauslassöffnung (14) steht, derart, dass der Anteil des Fluidstroms, der in die Versorgungsdüsen (40) eintritt und das Laufrad (16) versorgt, zur Auslassöffnung (14) zurückgeführt wird.

2. Beschlag nach Anspruch 1, wobei das Laufrad (16) in einer Laufradkammer (50) untergebracht ist, die fluidisch mit dem Hauptdurchgang (11) über einen Rückführdurchgang (52) verbunden ist, wobei die Versorgungsdüsen (40), die Laufradkammer (50) und der Rückführdurchgang (52) einen Sekundärdurchgang bilden, der parallel zum Hauptdurchgang (11) verbunden ist.

3. Beschlag nach Anspruch 2, wobei der Rückführdurchgang (52) in den Hauptdurchgang (11) in der Nähe der Auslassöffnung (14) mündet.

4. Beschlag nach einem der vorhergehenden Ansprüche, umfassend eine elektronische Datenübertragungseinheit (24), die durch den von den Spulen (20) erzeugten elektrischen Strom gespeist wird.

5. Beschlag nach einem der vorhergehenden Ansprüche, umfassend mindestens einen Sensor (22), der durch den von dem Spulenring (20) erzeugten elektrischen Strom gespeist wird.

6. Beschlag nach Anspruch 4, wobei die elektronische Datenübertragungseinheit (24) dazu konfiguriert ist, drahtlos ein Anwesenheitssignal zu übertragen, wenn sie durch den von dem Spulenring (20) erzeugten elektrischen Strom gespeist wird.

7. Beschlag nach Anspruch 6, wobei das genannte Anwesenheitssignal ein Datenpaket umfasst, das einen eindeutigen Beschlagcode enthält.

8. Beschlag nach einem der Ansprüche 6 oder 7 in Kombination mit Anspruch 5, wobei die elektronische Datenübertragungseinheit (24) betriebswirksam mit dem mindestens einen Sensor (22) verbunden ist und dazu konfiguriert ist, drahtlos Daten zu übertragen, die von dem mindestens einen Sensor (22) empfangen werden.

9. Beschlag nach einem der vorhergehenden Ansprüche, wobei die Spulen (20) so angeordnet sind, dass sie jeweilige Achsen parallel zur Rotationsachse (X) des Laufrads aufweisen.

10. Beschlag nach einem der vorhergehenden Ansprüche, wobei das Laufrad (16) eine Rotationsachse (X) aufweist, die koaxial zu mindestens einem Abschnitt des Hauptdurchgangs (11) ist.

11. Beschlag nach einem der vorhergehenden Ansprüche, wobei die elektrischen Anschlüsse (202) der Spulen (20) parallel zur Rotationsachse (X) des Laufrads ausgerichtet sind.

12. Beschlag nach einem der vorhergehenden Ansprüche, wobei der Beschlagkörper (10) umfasst :
einen ersten Körperabschnitt (102), in dem ein erstes Segment (11a) des Hauptdurchgangs (11) gebildet ist, das sich zwischen einem ersten proximalen Abschnitt (102a), der die Einlassöffnung (12) bildet, und einem ersten distalen Abschnitt (102b) erstreckt, wobei der Spulenring (200) von dem genannten ersten Körperabschnitt (102) getragen wird;
einen zweiten Körperabschnitt (104), in dem ein zweites Segment (11b) des Hauptdurchgangs (11) gebildet ist, das sich zwischen einem zweiten proximalen Abschnitt (104a) und einem zweiten distalen Abschnitt (104b) erstreckt, der die Auslassöffnung (14) bildet,
wobei der genannte zweite proximale Abschnitt (104a) den ersten distalen Abschnitt (102b) koaxial umgibt, um, mit dem ersten distalen Abschnitt (102b), eine Laufradkammer (50) zu bilden, in der das Laufrad (16) untergebracht ist,
und wobei die Laufradkammer (50) in fluidischer Verbindung mit dem zweiten Segment (11b) des Hauptdurchgangs (11) steht.

13. Beschlag nach einem der vorhergehenden Ansprüche, wobei eine Einwegvorrichtung (70) im Hauptdurchgang (11), stromabwärts des Laufrads (16) in Bezug auf die Richtung des unter Druck stehenden Fluids, untergebracht ist, die dazu konfiguriert ist, den Hauptdurchgang zu öffnen, wenn das Fluid einen Druck erreicht hat, der ausreichend ist, um eine vorbestimmte Menge an Elektrizität zu erzeugen.

14. Beschlag nach den Ansprüchen 12 und 13, wobei die Einwegvorrichtung (70) im zweiten Körperabschnitt (104) untergebracht ist und ein Verschlusselement (72) aufweist, das dazu geeignet ist, mit dem distalen Ende des ersten Segments (11a) des Hauptdurchgangs (11) zusammenzuwirken.

15. Beschlag nach einem der vorhergehenden Ansprüche, wobei die Spulen (20) elektrisch in Reihe miteinander verbunden sind.

16. Beschlag nach einem der vorhergehenden Ansprüche, umfassend eine elektronische Hauptplatine (38), auf der mindestens ein Sensor, eine Datenübertragungseinheit und eine elektronische Steuereinheit montiert sind, und eine ringförmige Spulenplatine (36), an die die elektrischen Anschlüsse der Spulen (20) angeschlossen sind und die mit der elektronischen Hauptplatine verbunden ist.

## Revendications

1. Un raccord (1) pour un circuit de fluide sous pression, comprenant:
un corps de raccord (10) traversé par un passage principal (11) pour un fluide sous pression, ledit passage principal (11) s'étendant entre une ouverture d'entrée de fluide (12) et une ouverture de sortie de fluide (14) ;
une roue (16) logée dans le corps de raccord (10) et entraînable en rotation par le fluide sous pression traversant le corps de raccord (10) ;
une pluralité d'aimants (18) supportés par la roue (16) et répartis circonférentiellement de manière à former une bague d'aimants (180) ;
une pluralité de bobines (20) logées dans le corps de raccord (10) et réparties circonférentiellement de manière à former une bague de bobines (200) couplée magnétiquement à la bague d'aimants (180) pour générer un courant électrique en présence d'un champ magnétique variable généré par la rotation de la bague d'aimants (180),
dans lequel une pluralité de buses (40) pour alimenter la roue (16) est obtenue dans le corps de raccord (10), lesquelles s'étendent radialement à partir du passage principal (11),
et dans lequel la roue (16) est en communication fluidique avec l'ouverture de sortie de fluide (14) de telle manière que la portion de flux de fluide qui entre dans les buses d'alimentation (40) et alimente la roue (16) est reconduite vers l'ouverture de sortie (14).

2. Un raccord selon la revendication 1, dans lequel la roue (16) est logée dans une chambre de roue (50) qui est reliée fluidiquement au passage principal (11) par un passage de retour (52), les buses d'alimentation (40), la chambre de roue (50) et le passage de retour (52) formant un passage secondaire qui est relié en parallèle au passage principal (11).

3. Un raccord selon la revendication 2, dans lequel le passage de retour (52) s'écoule dans le passage principal (11) à proximité de l'ouverture de sortie (14).

4. Un raccord selon l'une quelconque des revendications précédentes, comprenant une unité électronique de transmission de données (24) alimentée par le courant électrique généré par les bobines (20).

5. Un raccord selon l'une quelconque des revendications précédentes, comprenant au moins un capteur (22) alimenté par le courant électrique généré par la bague de bobines (20)

6. Un raccord selon la revendication 4, dans lequel l'unité électronique de transmission de données (24) est configurée pour transmettre sans fil un signal de présence lorsqu'elle est alimentée par le courant électrique généré par la bague de bobines (20).

7. Un raccord selon la revendication 6, dans lequel ledit signal de présence comprend un paquet de données contenant un code unique de raccord.

8. Un raccord selon l'une quelconque des revendications 6 ou 7 en combinaison avec la revendication 5, dans lequel l'unité électronique de transmission de données (24) est connectée de manière opérative à l'au moins un capteur (22) et est configurée pour transmettre sans fil des données reçues de l'au moins un capteur (22).

9. Un raccord selon l'une quelconque des revendications précédentes, dans lequel les bobines (20) sont agencées de manière à avoir les axes respectifs parallèles à l'axe de rotation (X) de la roue.

10. Un raccord selon l'une quelconque des revendications précédentes, dans lequel la roue (16) possède un axe de rotation (X) coaxial à au moins une portion du passage principal (11).

11. Un raccord selon l'une quelconque des revendications précédentes, dans lequel les bornes électriques (202) des bobines (20) sont orientées parallèlement à l'axe de rotation (X) de la roue.

12. Un raccord selon l'une quelconque des revendications précédentes, dans lequel le corps de raccord (10) comprend :
une première section de corps (102) dans laquelle un premier segment (11a) du passage principal (11) est obtenu, lequel s'étend entre une première portion proximale (102a) formant l'ouverture d'entrée (12) et une première portion distale (102b), la bague de bobines (200) étant supportée par ladite première section de corps (102) ;
une seconde section de corps (104) dans laquelle un second segment (11b) du passage principal (11) est obtenu, lequel s'étend entre une seconde portion proximale (104a) et une seconde portion distale (104b) qui forme l'ouverture de sortie (14),
dans lequel ladite seconde portion proximale (104a) entoure coaxialement la première portion distale (102b) de manière à former, avec la première portion distale (102b), une chambre de roue (50) dans laquelle la roue (16) est logée,
et dans lequel la chambre de roue (50) est en communication fluidique avec le second segment (11b) du passage principal (11).

13. Un raccord selon l'une quelconque des revendications précédentes, dans lequel un dispositif à sens unique (70) est logé dans le passage principal (11), en aval de la roue (16) par rapport à la direction du fluide sous pression, configuré de manière à ouvrir le passage principal lorsque le fluide a atteint une pression suffisante pour générer une quantité prédéterminée d'électricité.

14. Un raccord selon les revendications 12 et 13, dans lequel le dispositif à sens unique (70) est logé dans la seconde section de corps (104) et possède un élément d'obturation (72) adapté pour coopérer avec l'extrémité distale du premier segment (11a) du passage principal (11).

15. Un raccord selon l'une quelconque des revendications précédentes, dans lequel les bobines (20) sont connectées électriquement en série entre elles.

16. Un raccord selon l'une quelconque des revendications précédentes, comprenant une carte électronique principale (38), sur laquelle au moins un capteur, une unité de transmission de données et une unité de commande électronique sont montés, et une carte annulaire de bobines (36) à laquelle les bornes électriques des bobines (20) sont connectées et qui est connectée à la carte électronique principale.
